(19) Europäisches Patentamt
European Patent Office
Office européen des brevets

(11) **EP 1 862 904 A1**

(12) **EUROPEAN PATENT APPLICATION**
published in accordance with Art. 158(3) EPC

(43) Date of publication:
**05.12.2007 Bulletin 2007/49**

(51) Int Cl.:
***G06F 9/50*** *(2006.01)*

(21) Application number: **05727079.5**

(22) Date of filing: **22.03.2005**

(86) International application number:
**PCT/JP2005/005129**

(87) International publication number:
**WO 2006/100752 (28.09.2006 Gazette 2006/39)**

(84) Designated Contracting States:
**DE GB**

(71) Applicant: **Fujitsu Ltd.**
**Kawasaki-shi, Kanagawa 211-8588 (JP)**

(72) Inventors:
 • **GOTO, Ichiro**
 **c/o FUJITSU LIMITED**
 **Kawasaki-shi, Kanagawa 2118588 (JP)**
 • **YAMASHITA, Tomonori**
 **c/o FUJITSU LIMITED**
 **Kawasaki-shi, Kanagawa 2118588 (JP)**

 • **MATSUZAKI, Kazuhiro**
 **c/o FUJITSU LIMITED**
 **Kawasaki-shi, Kanagawa 2118588 (JP)**
 • **HASE, Kuniyasu**
 **c/o FUJITSU LIMITED**
 **Kawasaki-shi, Kanagawa 2118588 (JP)**
 • **NOGUCHI, Hiroshi**
 **c/o FUJITSU LIMITED**
 **Kawasaki-shi, Kanagawa 2118588 (JP)**

(74) Representative: **Holtby, Christopher Lawrence**
 **Haseltine Lake**
 **Lincoln House**
 **300 High Holborn**
 **London WC1V 7JH (GB)**

(54) **DISTRIBUTED PROCESSING MANAGEMENT DEVICE, DISTRIBUTED PROCESSING MANAGEMENT METHOD, AND DISTRIBUTED PROCESSING MANAGEMENT PROGRAM**

(57) In a distributed processing management apparatus, server 3 has a node table 5, a job management table 6 and a job class table 7 in order to manage the resource status such as the CPU operating ratio of each node in every predetermined time period. When the operating ratio of the CPU and other elements of a node rises after the input of a job and the speed of executing the input job falls, the server 3 re-inputs the job from the current node 2a to some other node 2b. With this arrangement, it is possible to improve the overall TAT and effectively exploit computer resources in grid computer environment.

FIG.3

EP 1 862 904 A1

## Description

### Technical Field

The present invention relates to a distributed processing management apparatus, a distributed processing management method and a distributed processing management program that control inputs and executions of jobs in a distributed computer system.

### Background Art

Conventionally, a program for distributed processing is installed in nodes connected to a network and the nodes are driven to operate for computations in a distributed processing/computing system comprising a plurality of nodes and a server which manages them. The results of the computations are collected and put to use. Any of various known methods of sequentially selecting and requesting idle nodes for computations is employed when installing a program for distributed processing. In recent years, there has been a tendency of utilizing home-use/office-use PCs (personal computers) for such a program. If surplus resources are to be utilized and their capabilities are to be exploited, the distributed processing program is normally so adapted as to be executed with the lowest priority so that the home-use/ office-use processing program may not be adversely affected or so controlled that the program may be executed only when the resources are being not used by some other program. Thus, once a distributed processing program is installed, PCs showing a low utilization ratio, or a low operating ratio, are selected to raise the efficiency of execution of the distributed processing program.

However, the operating ratio and other indexes are determined for every predetermined period and can be out of date when a distributed processing program is installed. Then, the distributed processing program may not necessarily be operated effectively. Additionally, with such an arrangement, the PCs may not be able to cope with the load and adapt itself to the execution of the distributed processing program if the load is low at the time of installation of the distributed processing program but rises thereafter. Particularly, home-use/office-use PCs are to be utilized, the operating ratios of the resources fluctuate remarkably so that the execution of the distributed processing program can often raise the load to consequently prolong the processing time inevitably.

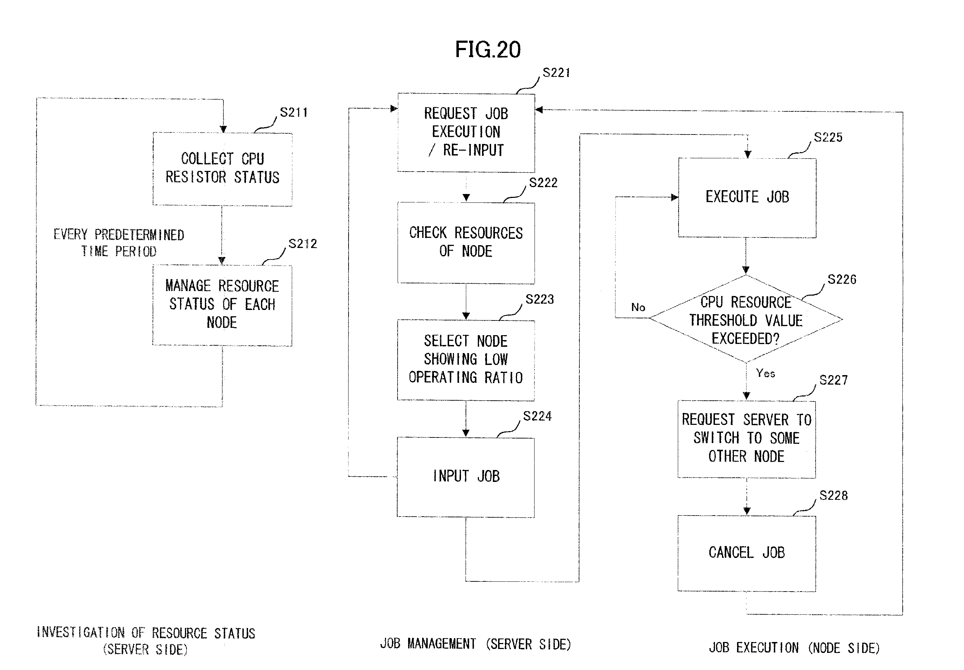

For the purpose of accommodating such problems, there are known distributed processing computing systems that are so schemed that, when the load of some nodes executing a distributed processing program rises, the server managing them is informed of the fact and requested to reinstall the distributed processing program in some other nodes. FIG. 20 of the accompanying drawings is a flowchart of the process to be executed by the server side and the executing node side of such a known distributed processing computing system. Referring to FIG. 20, when a distributed processing program is reinstalled in a known distributed processing computing system, the server side collects information on the CPU resource status (S211) and manages the resource status of each node (S212) for every predetermined period of time.

Additionally, in the flow of the process of managing jobs at the server side and inputting jobs to the node side, as a request is made to execute a job and a request to re-input the job is made S211), the server side looks into the resource status of each node (S222) and selects one or more nodes having a low operating ratio (S223) to input the job to the node or the nodes (S224). On the other hand, each node that is adapted to execute jobs actually executes the job input to it from the server side (S225) and determines if the threshold of the resource of the CPU is exceeded or not (S226). If the threshold of the resource of the CPU is not exceeded (S226, No), it keeps on executing the job. If, on the other hand, the threshold of the resource of the CPU is exceeded (S226, Yes), the node requests the server side to switch to some other node (S227) and the server side cancels the job it has input to the node and requested to be executed by the latter (S228).

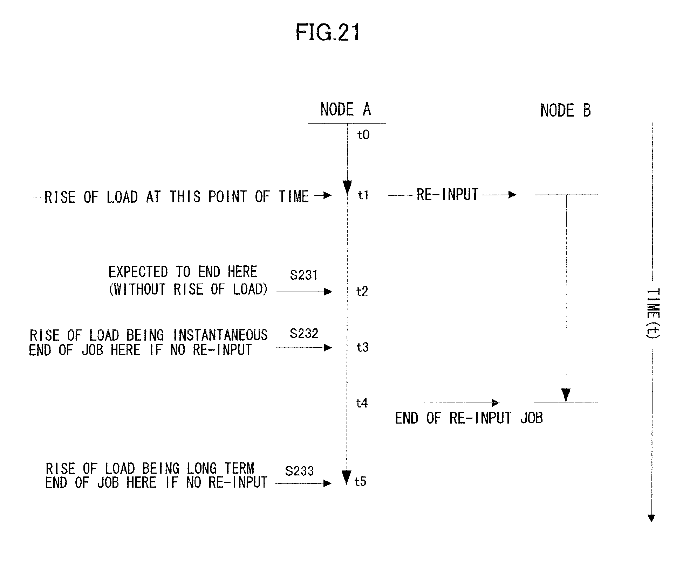

However, since the load of each node changes dynamically, it is not always efficient to switch the node whose threshold of the resource of the CPU is exceeded by a job at a certain clock time. FIG. 21 of the accompanying drawing is a schematic illustration of the status of each of a couple of nodes of a known distributed corresponding system at the time of switching from one of them to the other. Referring to FIG. 21, job is input to node A at clock time t0 and re-input to node B if the load of the node A rises at clock time t1. However, the job is executed by the node A and ends at clock time t2 if the load of the job does not rise (S231). If the rise of the load of the node A is instantaneous and the job is not re-input to the node B, the job is executed by the node A and ends at clock time t3 (S232). If, on the other hand, the load of the node A rises and the job is re-input to the node B at clock time t1, the job re-input to the node B is executed by the node B and ends at clock time t4. If, finally, the load of the node A rises but the job is not re-input to the node B, the end of execution of the job by the node A is postponed to clock time t5 (S233). In short, the efficiency of processing the job is remarkably improved by switching from the node A to the node B only when Step S233 is taken.

The technique disclosed in Patent Document 1 is known as conventional art related to the present invention. The technique disclosed in this patent document is intended to execute an application by means of a plurality of nodes in response to a request from a user terminal.

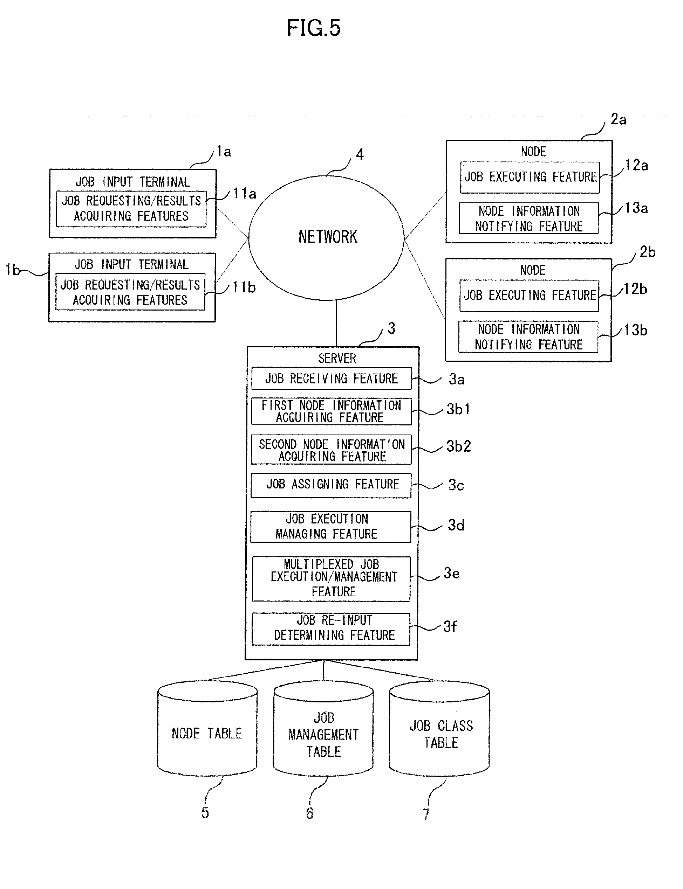

Patent Document 1: Jpn. Pat. Appln. Laid-Open Publication No. 2004-287889 (See Paragraph Nos. 0044 through 0075, FIGS. 5 through 7)

## Disclosure of the Invention

## Problem to be Solved by the Invention

However, in a distributed computer environment where a server receives a plurality of information processing tasks and inputs them to a plurality of nodes, the server manages the scheduling of the system in such a way that the processing ability of each node that executes a process may be fully exploited and the load of computations of the node may be optimized so that each process of the system may be executed efficiently. The server can perform its managing duty relatively easily in an environment where the processing node of each node that executes a process is exploited 100% or the processing ability of each node is guaranteed to be at or above a certain level. Additionally, it is possible to minimize the time required to complete each operation of processing information (to be referred to as turnaround time: TAT hereinafter), exploiting the overall ability of the system, by assigning a process that matches the processing resources (such as the CPU ability and the memory capacity) of each node executing a process to the node.

However, in a grid computer environment where idle times of nodes including office PCs that users utilize can be exploited, the number of the participating nodes can fluctuate and their computing capabilities can vary enormously, while their processing capacity can fluctuate violently depending on how many of them can actually be utilized, so that it is not possible to keep the TAT small in a scheduling that requires computation resources to be held to a constant level. Thus, there have been proposed management techniques of re-inputting a job into some other node when the processing of the job is delayed because the user of the node into which the job is firstly input starts some other application. Such management techniques include those of storing the interim results of processing the job and having some other node execute the job from the breakpoint and those of having some other node execute the job all over again from the very beginning.

However, with any of these techniques, the load of computations given by the user of the first node that is requested to process the job may be lessened and becomes able to finish the processing before the second node. In other words, the re-input (and the second and subsequent re-inputs) of the job may not necessarily improve the TAT. Additionally, with a technique of executing a job all over again, such a multiplexed processing of a job involves waste of resources and can reduce the computation potential of the entire system.

With a technique of resuming the execution of the job by the second node B from the breakpoint of the processing of the first node A, interruption and resumption of the job takes place constantly. Therefore, the load of computations increases if the job is not interrupted to a great disadvantage of the system. Furthermore, regardless of the technique of executing a job all over again and the technique of resuming the execution of the job from a breakpoint, the quantity of processing of the entire system increases to consequently delay the completion of the processes that the server is requested to execute when a job is executed dually (multiply) and the number of the registered nodes is not enough for the number of the processes requested for execution. Then, as a result, the TAT of the overall distributed computing system will fall. Thus, there is a demand for distributed processing management techniques that are applicable to distributed processing under the control of a server when the load of the processing node can fluctuate remarkably in a grid computer environment in order to minimize the TAT and effectively exploit the computation resources of the entire system.

In view of the above-identified problems, it is therefore the object of the present invention to provide a distributed processing management apparatus, a distributed processing management method and a distributed processing management program that can minimize the TAT and effectively exploit the entire computation resources of a distributed computing system.

## Means for Solving the Problem

In an aspect of the present invention, the above problems are dissolved by providing a distributed processing management apparatus adapted to be connected to a plurality of nodes so as to input a job to each of the nodes and manage the execution of the jobs, including: a first resource-related information acquiring section that acquires first resource-related information of a first node having a first job input to it; a second resource-related information acquiring section that acquires second resource-related information of a second node not having the first job input to it; and a job re-input determining section that determines if the first job input to the first node should also be input to the second node or not according to the first resource-related information acquired by the first resource-related information acquiring section and the second resource-related information acquired by the second resource-related information acquiring section.

Preferably, the job re-input determining section determines that the CPU operating ratio of the first node in executing the first job falls below a predetermined threshold value according to the first resource-related information when affirmatively determining re-input of the first job.

Preferably, the job re-input determining section determines that the progress ratio of the first node in executing the first job does not exceed a re-input limit value according to the first resource-related information when affirmatively determining re-input of the first job.

Preferably, the job re-input determining section determines availability or non-availability of a second node that is an idle node having a predetermined capability required to execute the first job and not executing a second job input to it according to the second resource-related information when determining re-input of the first job.

Preferably, the job re-input determining section determines if one or more predetermined conditions are met or not for canceling the second job being executed by the second node and re-inputting the first job according to the second resource-related information when determining re-input of the first job.

Preferably, the job re-input determining section determines if one or more predetermined conditions are met or not when it determines that there is no second node that is an idle node having a predetermined capability required to execute the first job and not executing a second job input to it according to the second resource-related information.

Preferably, the one or more predetermined conditions include at least that the priority given to the second job is lower than that of the first job, that the progress ratio of the second node in executing the second job is lower than a predetermined canceling limit value or that the second node satisfies the requirement of having a predetermined capability required to execute the first job.

In another aspect of the present invention, there is provided a distributed processing management method of inputting a job to each of a plurality of nodes and managing the execution of the jobs, including: a first resource-related information acquiring step that acquires first resource-related information of a first node having a first job input to it; a second resource-related information acquiring step that acquires second resource-related information of a second node not having the first job input to it; and a job re-input determining step that determines if the first job input to the first node should also be input to the second node or not according to the first resource-related information acquired by the first resource-related information acquiring step and the second resource-related information acquired by the second resource-related information acquiring step.

Preferably, the job re-input determining step determines that the CPU operating ratio of the first node in executing the first job falls below a predetermined threshold value according to the first resource-related information when affirmatively determining re-input of the first job.

Preferably, the job re-input determining step determines that the progress ratio of the first node in executing the first job does not exceed a re-input limit value according to the first resource-related information when affirmatively determining re-input of the first job.

Preferably, the job re-input determining step determines availability or non-availability of a second node that is an idle node having a predetermined capability required to execute the first job and not executing a second job input to it according to the second resource-related information when determining re-input of the first job.

Preferably, the job re-input determining step determines if one or more predetermined conditions are met or not for canceling the second job being executed by the second node and re-inputting the first job according to the second resource-related information when determining re-input of the first job.

Preferably, the one or more predetermined conditions include at least that the priority given to the second job is lower than that of the first job, that the progress ratio of the second node in executing the second job is lower than a predetermined canceling limit value or that the second node satisfies the requirement of having a predetermined capability required to execute the first job.

In still another aspect of the present invention, there is provided a distributed processing management program for causing a computer to input a job to each of a plurality of nodes and manage the execution of the jobs, including: a first resource-related information acquiring step that acquires first resource-related information of a first node having a first job input to it; a second resource-rotated information acquiring step that acquires second resource-related information of a second node not having the first job input to it; and a job re-input determining step that determines if the first job input to the first node should also be input to the second node or not according to the first resource-related information acquired by the first resource-related information acquiring step and the second resource-related information acquired by the second resource-related information acquiring step.

**Brief Description of the Drawings**

FIG. 1 is a flowchart of the process of collecting information on resources from nodes by an embodiment of a distributed processing management apparatus according to the present invention;

FIG. 2 is a flowchart of the job input process of the embodiment of the distributed processing management apparatus according to the present invention;

FIG. 3 is a chart illustrating the sequence of determination if a job is to be re-input or not in the embodiment of the present invention;

FIGS. 4A and 4B are respectively a flowchart and a chart illustrating the sequence of the job cancellation process that takes place due to the completion of a job in the embodiment of the present invention;

FIG 5 is a schematic illustration of an embodiment of the distributed processing management system according to the present invention, showing the overall configuration thereof;

FIG. 6 is a schematic illustration of exemplar items of the node table that the distributed processing management apparatus (server) of the embodiment of the present invention has;

FIG. 7 is a schematic illustration of the table of the capability values and the threshold values included in the items in FIG 6;

FIG. 8 is a schematic illustration of an exemplar node table that can be applied to the distributed processing management apparatus of the embodiment of the present invention;

FIG. 9 is a schematic illustration of exemplar items of the job management table that the distributed processing management apparatus (server) of the embodiment of the present invention may have;

FIG. 10 is a schematic illustration of an exemplar job management table that can be applied to the distributed processing management apparatus (server) of the embodiment of the present invention;

FIG. 11 is a schematic illustration of exemplar items of the job class table that the distributed processing management apparatus (server) of the embodiment of the present invention may have;

FIG. 12 is a schematic illustration of an exemplar job class table that can be applied to the distributed processing management apparatus (server) of the embodiment of the present invention;

FIG 13 is a flowchart of an operation of inputting a job in the embodiment of the present invention;

FIG 14 is Part 1 of the flowchart of the process of acquiring node information in the distributed processing management apparatus (server) of the embodiment of the present invention;

FIG. 15 is Part 2 of the flowchart of the process of acquiring node information in the distributed processing management apparatus (server) of the embodiment of the present invention;

FIG. 16 is a flowchart of the process of determination on re-input of a job by the distributed processing management apparatus (server) of the embodiment of the present invention;

FIG. 17 is a flowchart of the multiplexed execution process by the distributed processing management apparatus (server) of the embodiment of the present invention;

FIG. 18 is a flowchart of the job cancellation process to be executed by the node side of the embodiment of the present invention;

FIG. 19 is a flowchart of the end and job cancellation process to be executed by the distributed processing management apparatus (server) side of the embodiment of the present invention;

FIG. 20 is a flowchart of the process to be executed by the server side and the executing node side in a known distributed processing computing system; and

FIG. 21 is a schematic conceptual illustration of a situation where nodes are switched and a job is executed in a known distributed processing computing system.

**Best Mode for Carrying Out the Invention**

Now, the present invention will be described in greater detail by referring to the accompanying drawings that illustrate preferred embodiments of the invention.

**(Summary of the Invention)**

A distributed processing management apparatus according to the present invention is provided with a feature of monitoring the job input to a job-executing node. As the apparatus monitors the input job by means of its monitoring feature, it notifies the server side of the resource operating ratio of the job-executing nodes (the operating ratio of the resources, or all the process executing nodes, driven to operate for the input job) by every defined time. If the resource to which the job is input is short of a predetermined threshold value, it inputs the job to some other idle node (such a job input is referred to as job re-input hereinafter) and adopts the results of the job that has been ended. Then, it cancels the job that has been executed.

For job re-input, the apparatus defines execution policies including the following parameters for the job class (or the priority). Namely, the apparatus defines three execution policies including (1) the limit value for the number of times of job re-inputs (multiplexed input), (2) presence or absence of determination according to the end of job prediction and (3) the time limit value until the catch-up of the succeeding process for the job class (or the priority). Additionally, the embodiment of the distributed processing management apparatus according to the present invention provides an API (application programming interface) for utilizing software such as an OS from an application and makes it possible to predict the end of job by allowing a job to define the progress.

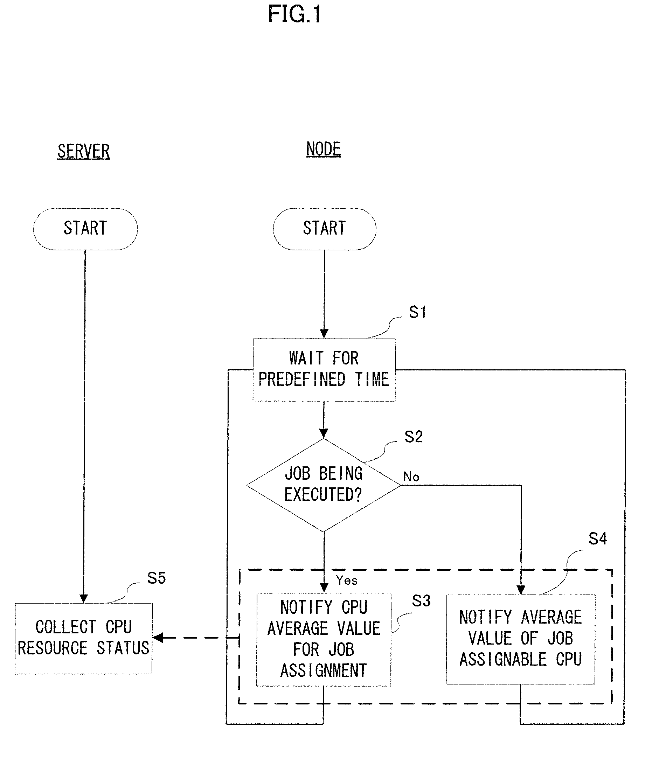

FIG. 1 is a flowchart of the process of collecting information on resources from nodes by an embodiment of the distributed processing management apparatus according to the present invention. Referring to FIG. 1, when a node is executing a job, it waits for a predefined time (S1) and determines if it is executing a job or not (S2). If it is executing a job (S2, Yes), it notifies the server of the average operating ratio of the CPUs to which the job is assigned (S3). If, on the other hand, it is not executing a job (S2, No), it notifies the server of the average operating ratio of the CPUs (the local CPUs) to which a job can be assigned (S4). In this way, the server collects information on the resource status of each CPU (S5).

In short, with the embodiment of the distributed processing management apparatus according to the present invention, each node notifies the server of the operating ratio of the CPU to which a job is assigned by every predefined time if it is executing a job, whereas each node notifies the server of the operating ratio of the local CPU if it is not executing a job. In this way, the server collects the notified information on the operating ratio of each CPU.

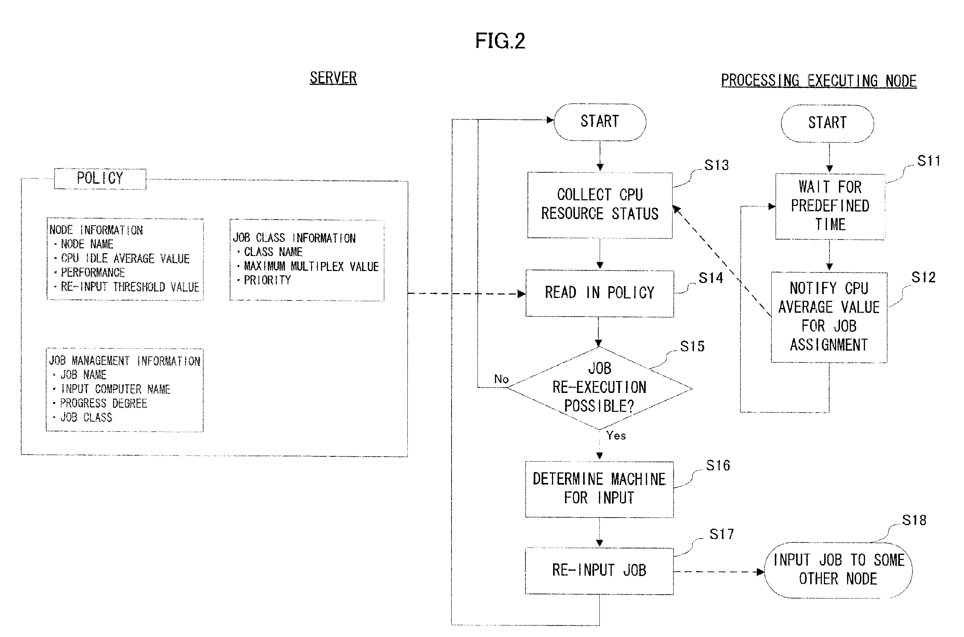

FIG. 2 is a flowchart of the job input process that the server executes with the embodiment of the distributed processing management apparatus according to the present invention. Referring to FIG. 2, a node that is executing a process waits for a predefined time (S11) and then notifies the server of the average operating ratio of the CPUs to which a job can be assigned (S12). Then, the server collects information on the resource status of each CPU (S13) and reads in the policy (S14).

The policy that the server reads in includes node information (the node name, the average CPU idle time, the performance, the re-input threshold value), job class information (the class name, the maximum multiplex value, the priority) and job management information (the job name, the job receiving computer name, the degree of progress, the job class) and so on.

Then, the server determines if the job can be re-executed or not according to the collected CPU resource status information (S15). If the job cannot be re-executed (S15, No), the server returns to Step S13 to repeat the above processing steps. If, on the other hand, the job can be re-executed (S15, Yes), the server selects the machine (PC) to which the job is to be input (S16) and re-input the job to the machine (PC) (S17). As a result of the above-described operation, it is now possible to re-input the job to some other node according to the CPU resource status information (S18).

In short, after inputting a job to a node, the server collects CPU information and information on the execution of the job from each job-executing node and then reads in the policies defining the CPU assignment threshold value of each job-executing node, the re-input threshold value (limit value) of each job and the maximum multiplex value for a job input.

Then, if the job execution status value of a CPU that is collected by every predetermined time is not higher than the threshold value, also not higher than the job re-input threshold value (limit value) and not higher than the maximum multiplex value, the job is re-input according to the rules defined below.

(1) If there is an idle node, the job is input to the node not executing any job.
(2) If there is not any idle node and all the nodes that the server manages are executing a job, the job that is being executed and shows the lowest execution status value among the jobs being executed and showing an execution status value not higher than the job re-input threshold value (limit value) defined by the corresponding job policy is cancelled and the job to be re-input is input to the machine. The cancelled job is returned to the head of the job queue provided by the server.

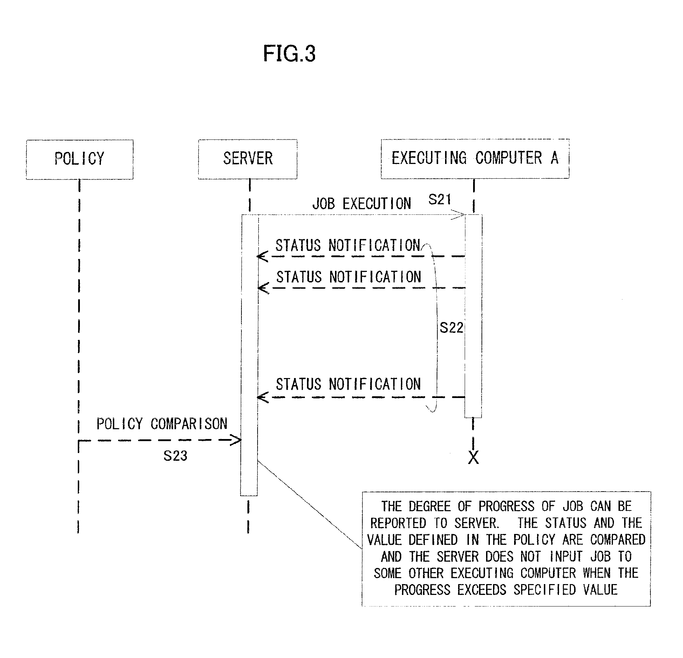

If the job progress status value of a job shown in the report from the node that is executing the job exceeds the job re-input threshold value (limit value), the server does not re-input the job to the node if the job progress status value is not higher than the threshold value and also not higher than the maximum multiplex value. FIG. 3 is a chart illustrating the sequence of determination if a job is to be re-input or not in this embodiment of the distributed processing management apparatus according to the present invention. Referring to FIG. 3, as the server causes an executing computer A to execute a job (S21), the executing computer A notifies the server of execution status information by every predetermined time (S22). In this way, the executing computer A notifies the server of information telling the degree of progress of the execution of the job and the server compares the progress status value and the value defined for progress status in the corresponding policy (S23). If the progress status value of the job is not smaller than the specified value, the server does not input the job to some other computer for execution.

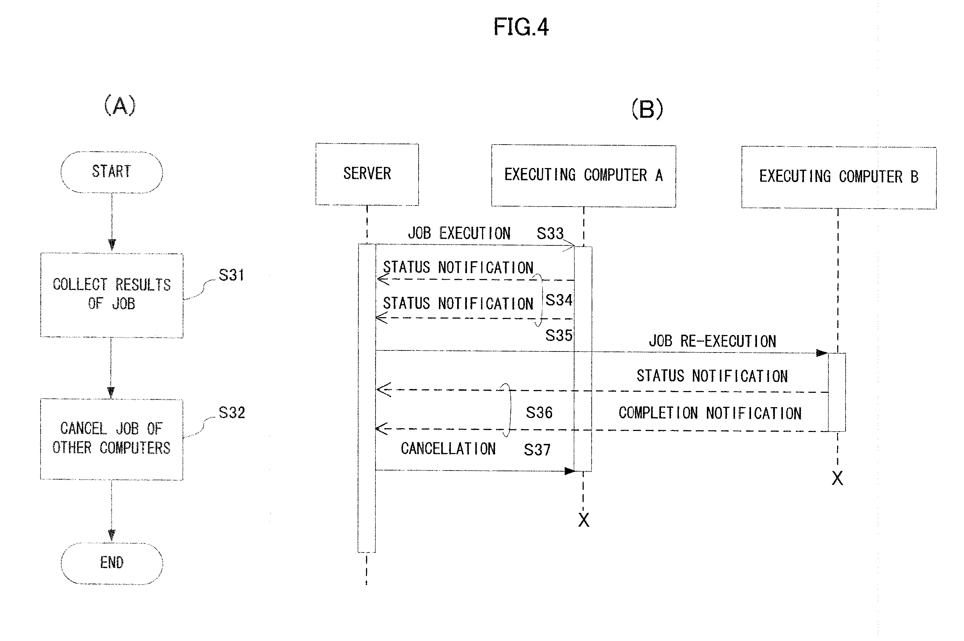

FIGS. 4A and 4B are respectively a flowchart and a chart illustrating the sequence of the job cancellation process that takes place due to the completion of a job in the embodiment of distributed processing management apparatus according to the present invention. Referring to FIG. 4A illustrating a flowchart of the job cancellation process that takes place due to the completion of a job, as the server collects information on the results of execution of a job (S31), it cancels the job of any other computer (S32). More specifically, referring to the chart of FIG. 4B illustrating the sequence of the job cancellation process, as the server has an executing computer A execute a job (S33), the executing computer A periodically notifies the server of information on the progress status of the job (S34). Additionally, as the server has an executing computer B execute the job (S35), the executing computer B periodically notifies the server of information on the progress status of the job (S36). Then, when the executing computer B ends the job, the job of the executing computer A is canceled (S37). In this way, either the job of the executing computer A and that of the executing computer B that are input in a multiplexed manner is ended, the server cancel all the remaining job or jobs.

**(Embodiment)**

Now, an embodiment of the distributed processing management apparatus according to the present invention will be described in greater detail. FIG. 5 is a schematic illustration of an embodiment of distributed processing management system according to the present invention, showing the overall configuration thereof. Referring to FIG. 5, the embodiment of the distributed processing management system comprises a plurality of job input terminals 1a, 1 b, a plurality of nodes 2a, 2b and a server 3 that is a distributed processing management apparatus that are connected to each other by way of a network 4.

The job input terminals 1 a, 1b have respective job requesting/results acquiring features 11a, 11b. The nodes 2a, 2b have respective job executing features 12a, 12b and information notifying features 13a, 13b. The server 3 has a job receiving feature 3a, a first node information acquiring feature (a first resource-related information acquiring section) 3b1, a second node information acquiring feature (a second resource-related information acquiring section) 3b2, a job assigning feature 3c, a job execution managing feature 3d, a multiplexed job execution/management feature 3e and a job re-input determining feature (job re-input determining section) 3f. The server 3 is connected to a node table 5, job management table 6 and job class table 7.

There are a large number of job input terminals 1 a, 1b, which are input/output terminals such as PCs by way of any of which a system user can input a job. The job input terminals 1 a, 1b have a feature of requesting the server 3 to execute a job and acquiring the output/results thereof.

There are a large number of nodes 2a, 2b, which have two features respectively including job executing features 12a, 12b and node information notifying features 13a, 13b. The job executing features 12a, 12b are such that they receive an input file and an execution program from the server 3, execute the respective jobs at the corresponding nodes 2a, 2b and return the output/results thereof to the server 3. Each of the job executing features 12a, 12b also include a feature of canceling a job according to an order from the corresponding node 2a or 2b or the server 3. The job canceling feature of each node will be described in greater detail hereinafter. The node information notifying features 13a, 13b include a feature of notifying the server 3 of various pieces of information (including the node name, the machine specifications, the operating times of the CPUs, the job execution hours and so on) on the own node 2a or 2b. The node information notifying feature will be described in greater detail hereinafter.

The server 3 is a computer for managing the entire distributed processing management apparatus that is provided with three tables and six features. The job receiving feature 3a is a feature of receiving a job execution request from any of the job input terminals 1 a, 1 b and puts it on a job queue. The first node information acquiring feature (the first resource-related information acquiring section) 3b1 is a feature of acquiring node information notified to the server 3 from the node 2a and preparing/updating the node table 5. The second node information acquiring feature (the second resource-related information acquiring section) 3b2 is a feature of acquiring node information notified to the server 3 from the node 2b and preparing/updating the node table 5.

The job assigning feature 3c is a feature of taking out from the job queue, selecting nodes 2a, 2b that meet the requirements (e.g., the OS type and the node performance) of the job and are not executing any job and assigning the job to the nodes 2a, 2b.

The job execution managing feature 3d is a managing feature necessary for having the nodes 2a, 2b execute the assigned job. It is a feature of preparing/updating a job management table 6 and executing the job executing process (or sending an input file and a execution file to the nodes 2a, 2b, ordering the nodes 2a, 2b to execute the job and receiving the output/results after the completion of the job). The process to be executed when canceling a job is also included in the job execution managing feature 3d. The multiplexed job execution/management feature 3e is a management feature of referring to the job management table 6 and executing a job in a multiplexed manner when the job execution time can be reduced by re-inputting the job. The job re-input determining feature 3f is a feature of determining, for instance, if it should input the job that is input to the node 2a also to the node 2b or not. The above listed features will be described in greater detail hereinafter.

Now, the specifications of the node table 5, the job management table 6 and the job class table 7 that the server 3 is equipped with will be described below in detail.

**(Node Table Specifications)**

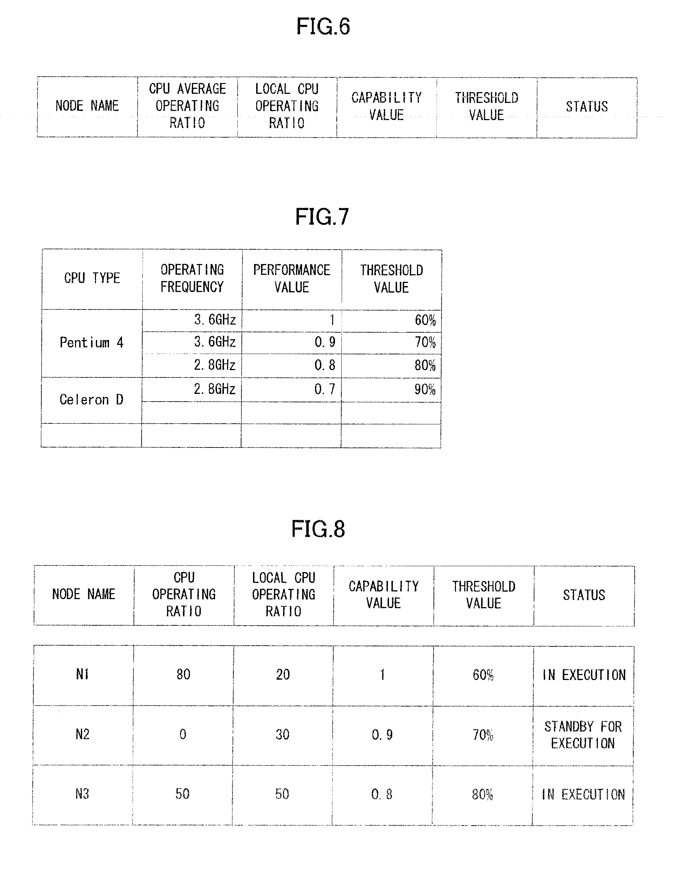

FIG. 6 is a schematic illustration of exemplar items of the node table that the server 3 has. The nodes 2a, 2b shown in FIG. 5 are managed according to the items of the node table shown in FIG. 6. FIG. 7 is a schematic illustration of the table of the capability values and the threshold values included in the items in FIG. 6.

So-called node names are recorded under the item of "node name" among the items of the node table of FIG. 6. The average value of the operating ratios of the CPUs to which a job is assigned is recorded under the item of "CPU average operating ratio". The local CPU operating ratio (100 - IDLE) of each node is recorded under the item of "local CPU operating ratio". The machine specifications including the performance of the CPUs are reduced to a relative numerical value and recorded under the item of "capability value", In other words, "the capability value" is proportional to the performance as shown in FIG. 7 and a value that reflects "the capability value" is defined for the item of "threshold value". The status of the machine telling if the machine is waiting for execution of a job or the machine is executing a job is recorded under the item of "status". FIG. 8 is a schematic illustration of an exemplar node table that can be applied to the distributed processing management apparatus of the present invention. In the illustrated instance, the node table is prepared for three nodes with node names of N1, N2 and N3.

**(Job Management Table Specifications)**

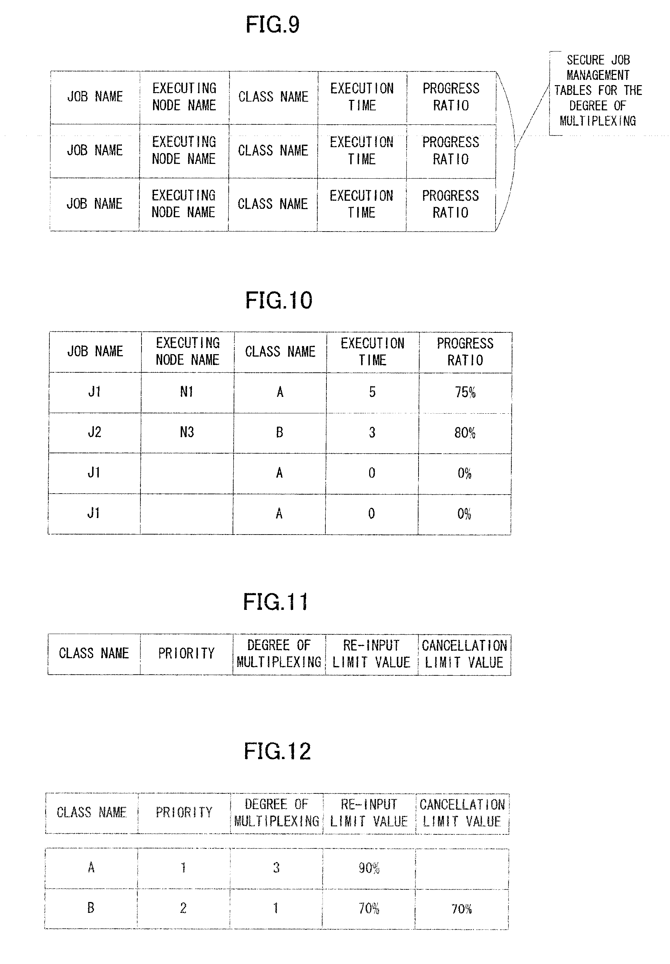

FIG. 9 is a schematic illustration of exemplar items of the job management table that the server 3 is equipped with. The job management table is used to manage the jobs to be input to the nodes. A table that corresponds to the degree of multiplexing defined for each job class is prepared in the job management table and job information is registered in the job management table each time a job is executed in a multiplexed manner. In other words, there are job management tables for the number of multiplexes of jobs.

Referring to the items of the job management table shown in FiG 9, job names are recorded under the item of "job name" and the names of executing nodes are recorded under the item of "executing node name", while job class names are recorded under the item of "class name". Additionally, the execution times of corresponding jobs are recorded under the item of "execution time" and the progress ratios of corresponding jobs are recorded under the item of "progress ratio". FIG. 10 is a schematic illustration of an exemplar job management table that can be applied to the distributed processing management apparatus of the present invention. FIG. 10 shows job management tables of two nodes having respective node names of J1 and J2.

**(Job Class Table Specifications)**

FIG. 11 is a schematic illustration of exemplar items of the job class table that the server 3 is equipped with. In other words, the policy of each input job is registered in the job class table. Of the items of the job class table, the class names of the input jobs are recorded under the item of "class name" and the priority of each input job is recorded under the item of priority, whereas the maximum multiplex value is recorded under the item of multiplex value". The threshold value for the execution time of each re-input job is recorded under the time of "re-input limit value". Thus, a job is not re-input when the threshold value is exceeded. The threshold value for switching a job is recorded under the item of "cancellation limit value". When the threshold value is exceeded, no job switching that is based on priority takes place. FIG. 12 is a schematic illustration of an exemplar job class table that can be applied to the distributed processing management apparatus of the present invention. In the illustrated instance, the job class table shows two job class names including job class name A and job class name B.

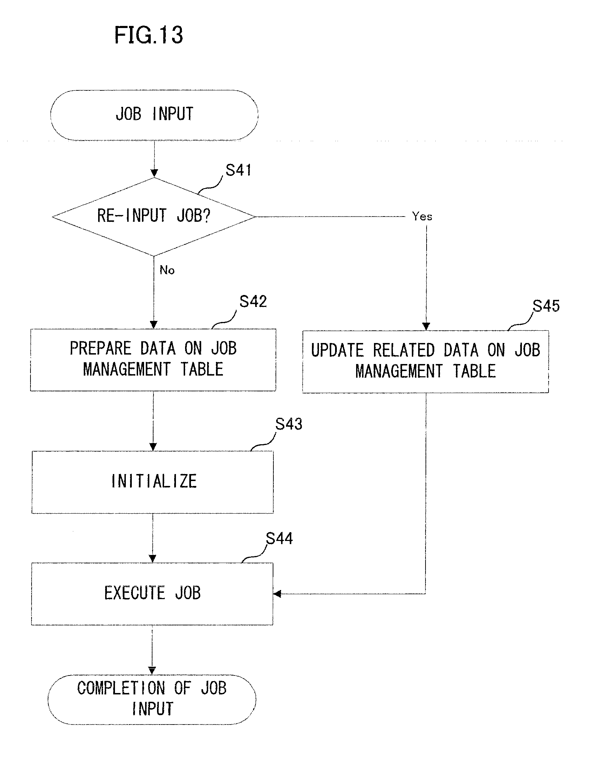

Now, the flow of the operation of inputting a job to a node will be described below. FIG. 13 is a flowchart of an operation of inputting a job in the distributed processing management apparatus of the present invention. Referring to FIG. 13, firstly it is determined if a job is re-input or not (S41) and, if it is determined that a job is not re-input (S41, No), data are prepared on the job management table as shown in FIG. 10 (S42) and an initializing process is executed (S43). Then, the job input to a desired node is executed (S44). If, on the other hand, it is determined in Step S41 that a job is re-input (S41, Yes), the corresponding data in the job management table are updated (S45) and the job input to the desired node is executed (S44). In this way, the operation of inputting a job is completed.

In short, when inputting a job, job data are registered to the job management table as shown in FIG. 10, When a job is re-input, the job management table that has been prepared is updated.

Now, the operation of acquiring node information will be described below.

**(Acquisition of Node Information 1)**

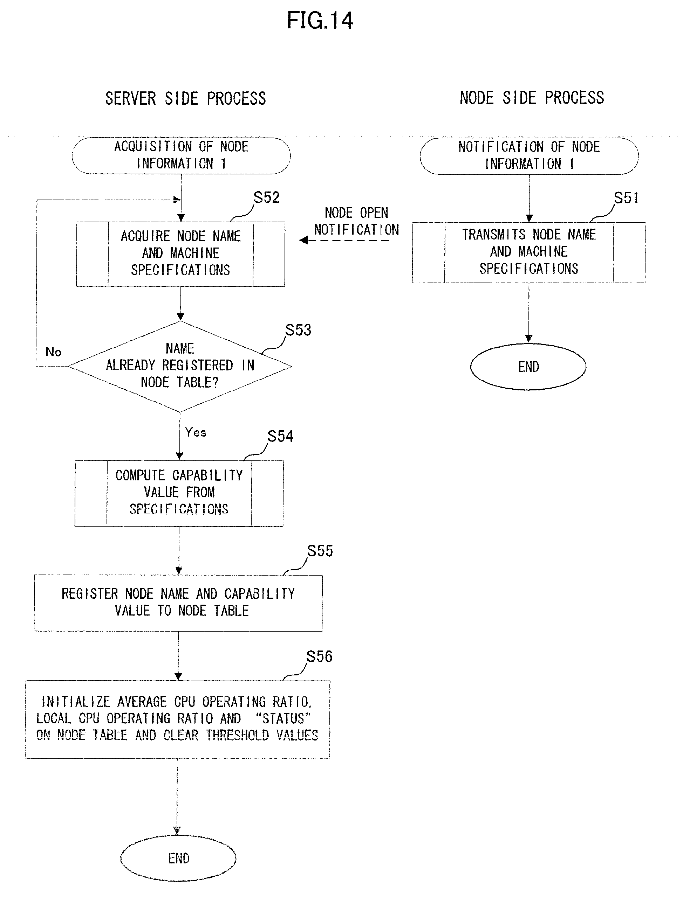

FIG. 14 is Part 1 of the flowchart of the process of acquiring node information in the server shown in FIG. 5. The flowchart of FIG. 14 shows a process of notification of node information by the node side and a process of acquisition 1 of node information by the server side. Referring to FIG 14, firstly as the node side transmits the node name and the machine specifications to the server side as node opening notification (S51), the server side executes a process of acquiring the node name and the machine specifications as node opening notification (S52). Additionally, the server side determines if the node table as shown in FIG. 8 contains a registered node name or not (S53).

If the node table does not contain any registered node name (S53, No), the server side returns to Step S52 and executes a process of acquiring the node name and the machine specifications. If, on the other hand, the node table contains a registered node name (S53, Yes), the server side computationally determines the capability value from the specifications of the machine (S54) and registers the node name and the capability value to the node table as shown in FIG. 8 (S55). Additionally, the server side initializes the average operating ratio of the CPUs, the operating ratios of the local CPUs and their statuses and clears the threshold values (S56).

In short, node information as shown in FIG. 14 is acquired when the computer (PC) that operates as a node is powered or when the distributed processing control program is started at the node side (and hence when a process of receiving a job is started).

**(Acquisition of Node Information 2)**

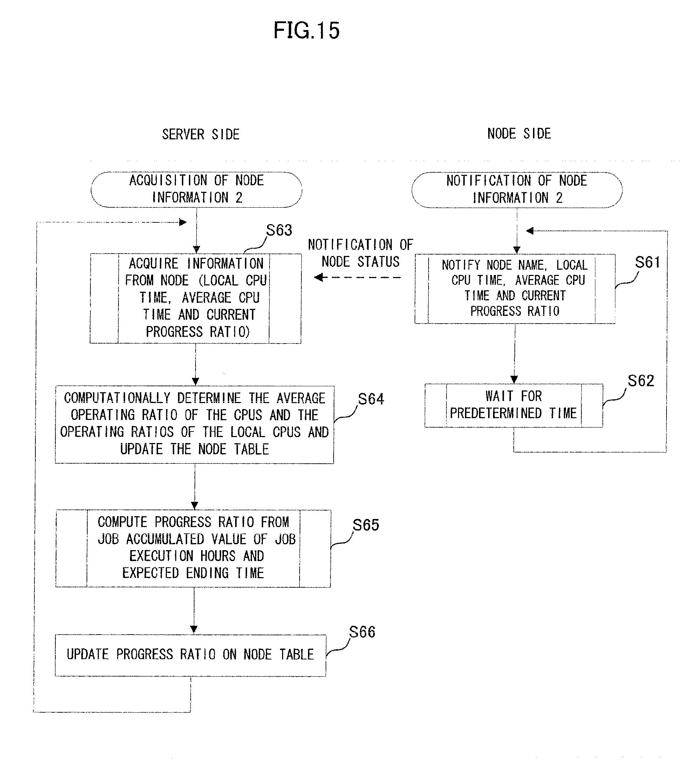

FIG. 15 is Part 2 of the flowchart of the process of acquiring node information in the distributed processing management apparatus shown in FIG. 5. The flowchart of FIG. 15 shows a process of acquisition 2 of node information by the node side and a process of acquisition 2 of node information by the server side.

Referring to FIG 15, the node side transmits the node name, the operating times of the local CPUs, the average operating time of the CPUs and the current progress ratios to the server side as node information (S61). The node side notifies the server side of such node information at regular time intervals (S62).

On the other hand, upon receiving the node information from the node side, the server side executes a node information acquisition process on the average operating time of the CPUs, the operating times of the local CPUs and the progress ratios (S63) and computationally determines the average operating ratio of the CPUs and the operating ratios of the local CPUs. Then, it updates the node table as shown in FIG. 8 (S64). Additionally, the server side computationally determines the current progress ratios from the accumulated value of the job execution hours and the expected ending time (S65). Then, the server side updates the progress ratios on the node table (S66) and returns to Step S63 to repeat the above-described processing steps.

The average operating ratio of the CPUs refers to the accumulated value of the average operating times for a predetermined period in the past divided by the total hours of the predetermined period in the past. In other words, the average operating ratio of the CPUs is the average operating ratio of the use of the CPU of a node by an input job. The operating ratio of a local CPU refers to the accumulated value of the operating times for a predetermined period in the past divided by the total hours of the predetermined period in the past. In other words, the operating ratio of a CPU is the average operating ratio of a local CPU by an input job.

Thus, in the process of acquiring node information Part 2 shown in FIG 15, as long as a node computer is operating according to the node side distributed process control program, it keeps on transmitting information on the processing status at regular intervals. Then, the server side computes the average operating ratio of the CPUs and the operating ratio of the local CPU and updates the progress ratio on the node table. Note that the progress ratio of the node side is nil when it is not requested to execute any job by the server side.

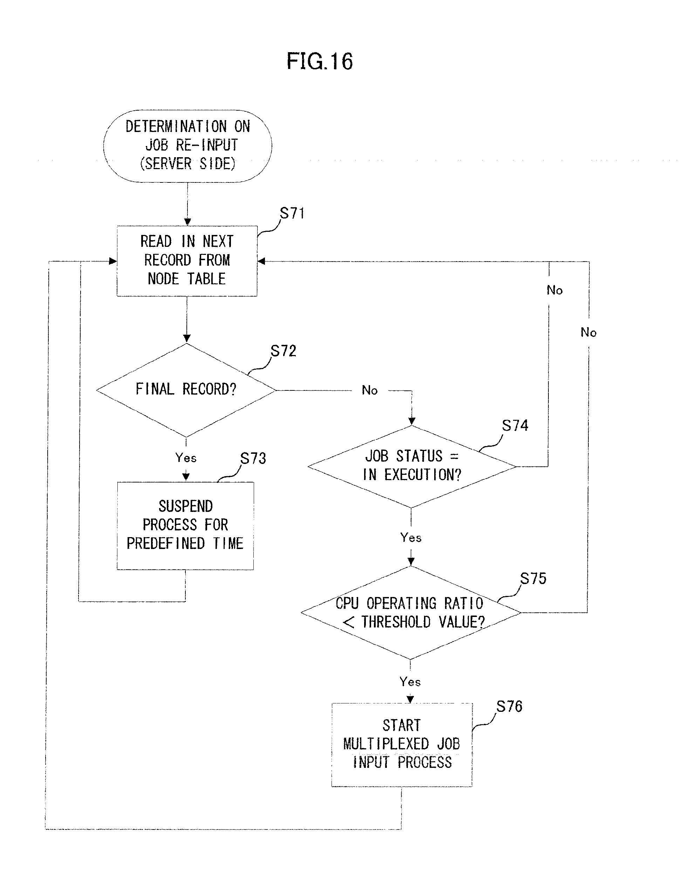

Now, the determination on re-inputting a job that the distributed processing management apparatus (server) makes as shown in FIG. 5 will be described below. FIG 16 is a flowchart of the process of determination on re-input of a job by the distributed processing management apparatus (server) of this embodiment. Referring to FIG 16, when the server makes determination on re-inputting a job, it firstly reads in the record on the node next to the node to which the job is input from the node table as shown in FIG. 8 (S71). Then, it determines if the record it reads in is a final record or not (S72). If it is a final record (S72, Yes), it suspends the process for a predefined time period (e.g., 1 minute) (S73) and returns to Step S71, where it reads in the record of the node next to the node to which the job is currently input from the node table and repeats the process from Step S71 and on.

If, on the other hand, the record it reads in is not a final record (S72, No), the server determines if the current job status is in execution or not (S74). If the job is being executed (S74, Yes), it determines if the average operating ratio of the CPUs is smaller than a predetermined threshold value or not (S75). If the average operating ratio of the CPUs is smaller than the predetermined threshold value (S75, Yes), the server starts a multiplexed job input process (S76) and returns to Step S71, where it repeats the above-described process. If the job status is determined to be not in execution in Step S74 (S74, No) or if the average operating ratio of the CPUs is determined to be greater than the predetermined threshold value in Step S75 (S75, No), the server returns to Step S71, where it repeats the above-described process.

In short, when the server shown in Fig. 16 makes determination on re-input of a job, it reads in the leading record on the job management table shown in FIG. 10 and, if the record it reads in is the record of the node executing a job, it determines if the average operating ratio of the CPUs is smaller than a predefined threshold value or not. Then, it starts a multiplexed job input process if the average operating ratio of the CPUs < the threshold value. On the other hand, the server looks into the next record if the relationship of the average operating ratio of the CPUs < the threshold value does not hold true. When the process down to the final record is completed in this way, the server suspends the job for a predefined time period (e.g., 1 minute) and restarts the process from the leading record.

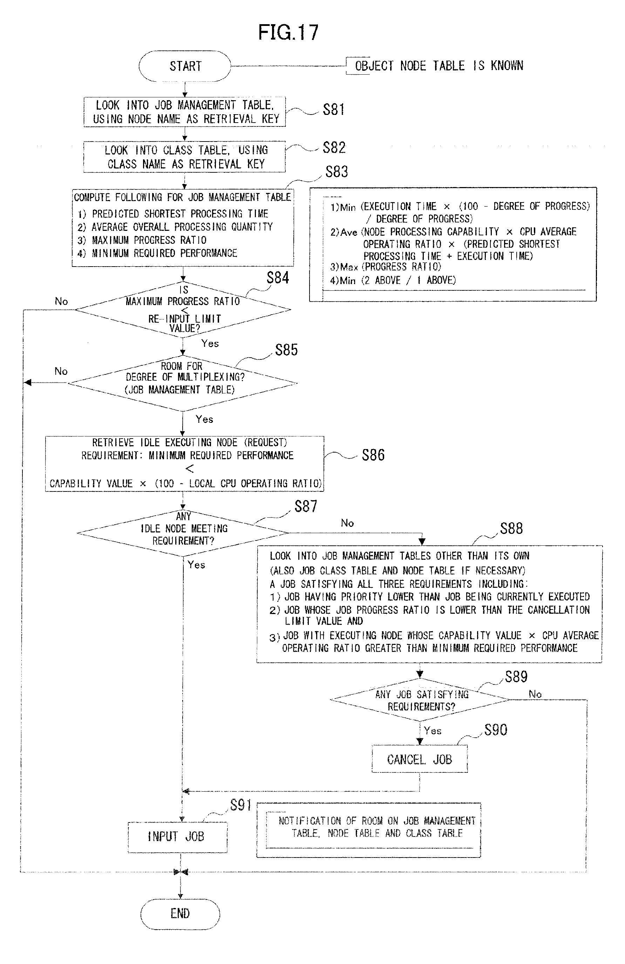

Now, the flow of the multiplexed execution process by the server will be described below. FIG. 17 is a flowchart of the multiplexed execution process by the distributed processing management apparatus (server) of this embodiment. For the flow of the multiplexed execution process shown in FIG. 17, it is assumed that the node table that is effective at the time of starting the multiplexed execution process is known.

Referring to FIG. 17, firstly the server looks into the job management table as shown in FIG 10, using the node name as key for the retrieval (S81). Then, it determines the priority of the job to be input, the degree of multiplexing and the re-input limit value from the job class table as shown in FIG. 12 in order to retrieve the job class, using the class name on the job management table it looks into as key (S82).

Then, the server determines by computations the values for the four items listed below from each piece of job information on the job management table shown in FIG. 10 for the degree of multiplexing of the job. If necessary, the node table of FIG. 8 is also used for the retrieval. Thus, the server computationally determines the values for the four items listed below in Step S83.

(1) Predicted shortest processing time = Min (execution time × (100 − degree of progress) / degree of progress)

(2) Average overall processing quantity = Ave (node processing capability × CPU average operating ratio × (predicted shortest processing time + execution time)

(3) Maximum progress ratio = Max (progress ratio)

(4) Minimum required performance = Min (average overall processing quantity / predicted shortest processing time)

The minimum required performance of (4) refers to the smallest required performance necessary for completing the process within the predicted shortest processing time that is expressed by a unit of capability value x CPU average operating ratio.

Now, exemplar computations will be shown below by using specific numerical values. For instance, assume that capability value = 0.8, CPU average operating ratio = 60%, processing time = 4 hours and progress ratio = 40%. Then,

(1) predicted shortest processing time = 4 [hours] × (100 − 40) / 40 = 6 [hours]

(2) average overall processing quantity = 0.8 × 60 [%] × (6 + 4) = 480

(3) maximum progress ratio = 40 [%]

(4) minimum required performance = 480 / 6 = 80.

Thus, any node having a capability value = 1.0, a local CPU operating ratio = 20% or less (and hence being idle by 80% or more) corresponds to the above values. When a plurality of jobs is input, the minimum value is determined for (1) predicted shortest processing time and the average value is determined for (2) overall processing quantity, while the maximum value is determined for (3) progress ratio.

Returning again to the flowchart of FIG. 17, the server compares the maximum processing ratio determined in Step S83 and the re-input limit value shown in the job class table, which is like the one illustrated in FIG. 12, and, if the maximum processing ratio is not smaller than the re-input limit value (if the relationship of maximum processing ratio < re-input limit value does not hold true) (S84, No), the server ends the multiplexed execution process without multiplexed input.

If the maximum processing ratio is smaller than the re-input limit value (S84, Yes), the server determines the room for the degree of multiplexing (or the room in the job management table) and, if the degree of multiplexing in the job class table is exceeded (S85, No), it ends the multiplexed execution process without multiplexed input.

If, on the other hand, it is found that the degree of multiplex in the job class table is not exceeded (S85, Yes) as a result of determining the degree of multiplexing (the room in the job management table) in Step S85, it requests (or retrieves) an idle job-executing node where the relationship of the minimum required performance < the capability value x (100 -local CPU operating ratio) holds true (S86).

Then, the server determines if there is an idle node that meets the above requirement or not on the basis of the results of the retrieval operation (S87) and, if there is not any idle node that meets the requirement (S87, No), it retrieves a job that satisfies all the three requirements listed below from the job management tables other than its own job management table. If necessary, it also looks into the node table and the job class table for the retrieval (S88).

Namely, in the retrieval process using the job management table, the server retrieves a job that satisfies all the three requirements including:

(1) a job having priority lower than the job being currently executed,
(2) a job whose job progress ratio is lower than the cancellation limit value, and
(3) a job with an executing node whose capability value x CPU average operating ratio is greater than the minimum required performance.

Then, it determines if there is a job that satisfies all the three requirements or not (S89). !f there is not any job that satisfies all the three requirements (S89, No), it ends the multiplexed execution process without doing any multiplexed input. If, on the other hand, there is a job that satisfies all the three requirements (S89, Yes), it cancels the job (S90).

If, on the other hand, there is found an idle node that meets the requirement in Step S87 or there is found a node that meets the requirements in Step S90, the server either inputs a job, notifying the room on the job management table, the node table to be used for requesting job execution and the job class table to be used for multiplexed execution, or requests a job input (S91).

Now, the flow of the job cancellation process that the distributed processing management apparatus (server) executes will be described below.

**(Job Cancellation Process of the Node Side)**

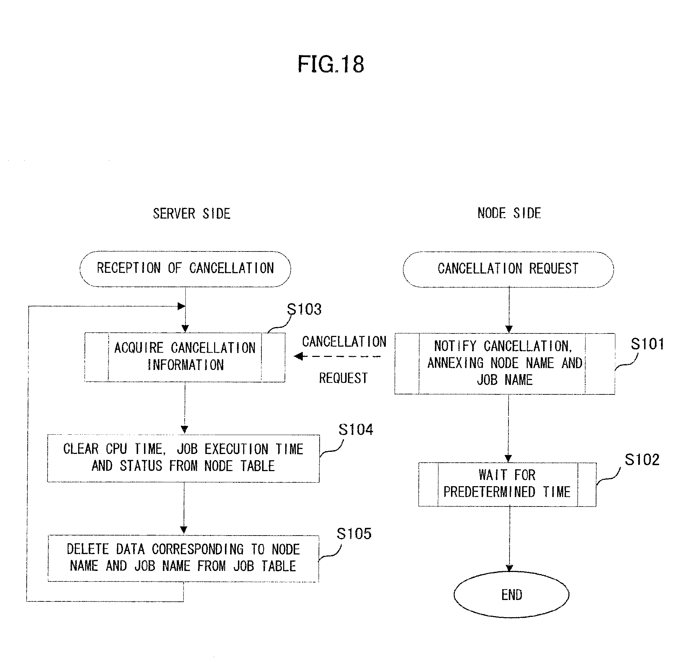

FIG 18 is a flowchart of the job cancellation process to be executed by the node side in the distributed processing management system shown in FIG. 5. in the process of cancellation request at the node side, the node side sends a cancellation request to the server side with the node name and the job name (S101). Then, the node side sends such a cancellation request at predetermined regular intervals (S102).

In a cancellation receiving process to be executed by the server side, on the other hand, upon receiving a cancellation request from the node side, the server side executes a process of acquiring cancellation information (S103) and clears the CPU average operating time (operating ratio), the local CPU operating time (operating ratio), the progress ratio and the progress status on the node table (S104). Additionally, it deletes the data that correspond to the node name and the job name from the job management table (S105). Note, however, when such a cancellation request is made by a node to which a multiplexed job is input, only the job of the cancellation requesting node is deleted from the job management table and the multiplexed job that is being executed by other nodes is not deleted.

In other words, in the job cancellation process of the node side, it is possible to suspend the distributed processing program at the node according to the intention of the proper user and put the node back into a status of being occupied by the user for use. The distributed processing program that is being executed is canceled. Additionally, upon receiving the cancellation request, the server side erases the corresponding node information and the corresponding job information respectively from the node table and the job management table. The constant time WAIT process at the node side refers to the waiting time provided for the server side to reliably execute the cancellation process. However, the constant time WAIT process is not necessary when the server side acknowledges the completion of the cancellation process in response to the cancellation request.

**(Job Cancellation Process of the Server Side)**

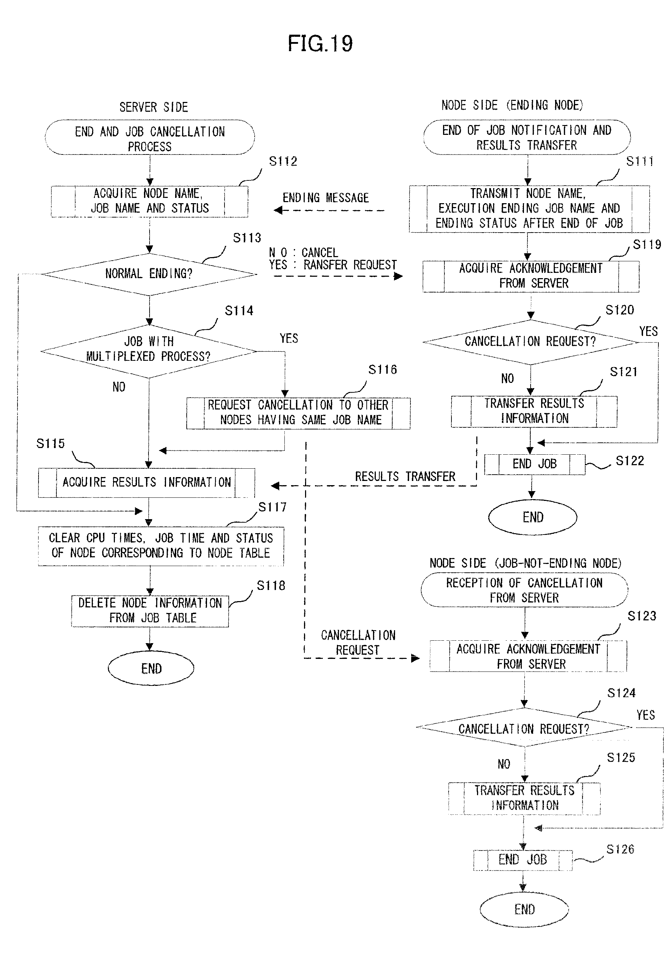

FIG. 19 is a flowchart of the end and job cancellation process to be executed by the server side in the distributed processing management system shown in FIG 5. Referring to FIG. 19, when the node that ends the job executes an end of job notification and results transfer process, it firstly transmits the node name, the execution ending job name and the ending status to the server side as ending message after the end of the job (S111).

Then, in the ending and cancellation process of the server side, the server side acquires the node name, the job name and the execution status from the node side (S112) and determines if the job is ended normally or not (S113). If the server side determines that the job is ended normally (S113, Yes), it also determines if there is a job being subjected to a multiplexed process or not (S114). If there is not any job being subjected to a multiplexed process (S114, No), it acquires results information (S115). If, on the other hand, there is a job being subjected to a multiplexed process (S114, Yes), it transmits a cancellation request to the other nodes having the same job name (S116) and then acquires results information (S115).

Then, the server clears the CPU average operating time (operating ratio), the local CPU operating time (operating ratio), the progress ratio and the progress status of the node that corresponds to the node table (S117). Additionally, the server deletes the node information corresponding to the node name and the job name from the job management table (S118). If it is determined by the server side in Step S113 that the job is not ended normally (S113, No), the server side directly clears the CPU average operating time (operating ratio), the local CPU operating time (operating ratio), the progress ratio and the progress status of the node corresponding to the node table (S117). Additionally, the server deletes the node information corresponding to the node name and the job name from the job management table (S118).

On the other hand, if the server determines in Step S113 that the job is not ended normally (S113, No and cancelled), that the job is ended normally (S113, Yes and transfer request is made), the job-ending node of the node side receives a corresponding acknowledgement request from the server (S119).

Then, the node side determines if the acknowledgement request acquired from the server side is a cancellation request or not (S120). If the acknowledgement request is not a cancellation request (S120, No), the node side transfers the results information to the server side (S121) and ends the job (S122). If, on the other hand, the acknowledgement request is a cancellation request (S120, Yes), the node side immediately ends the job (S122).

In the process of receiving cancellation from the server, as the job-not-ending node that is executing a multiplexed job at the node side transmits a cancellation request to the other nodes having the same job name in Step S116 (S116), it receives the cancellation request and also the acknowledgement request from the server (S123). Then, the node side determines if the acknowledgement request acquired from the server is a cancellation request or not (S124). If the acknowledgement request is not a cancellation request (S124, No), the node side transfers the results information to the server side (S125) and ends the job (S126). If, on the other hand, the acknowledgement request is a cancellation request (S124, Yes), the node side immediately ends the job (S126).

Thus, when the job is ended in the end and job cancellation process of the server side, the node notifies the server side of information on the end of job. The server checks if the job is being executed in a multiplexed manner or not and collects (harvests) data on the ended job from the node. If the job is being executed in a multiplexed manner, the server suspends the job of the other nodes (job cancellation). When the server side cancels a job for its own reason, the job having the same name that is being executed in a multiplexed manner is canceled simultaneously and the nodes executing the multiplexed job are released at the same time.

Additionally, when the server cancels the job having low priority and input to a node in order to input a multiplexed job, the node receives the cancellation process from the server and releases itself.

When the operations of the flowcharts described above for the embodiment of the present invention are stored in a computer readable recording medium as a distributed processing management program to be executed by a computer, it is possible to cause the computer of a distributed processing management apparatus to use the distributed processing management method. Computer readable recording mediums that can be used for the purpose of the present invention include portable recording mediums such as CD-ROMs, flexible disks, DVDs, magneto-optical disks and IC cards, data bases holding computer programs, any computers and their data basis as well as transmission mediums on communication lines.

**Industrial Applicability**

As described above in detail, according to the present invention, it is possible to minimize the time from the execution of any of various processes to the completion thereof (TAT) and the manager can decide a policy of duplex (multiplex) execution, considering the characteristics of the distributed environment depending on the quantities of resources and the degree of progress even in a distributed processing environment such as a grid computer environment where the capabilities of individual executing/processing computers vary enormously and the processing time also varies dramatically. Therefore, it is possible to improve the overall TAT and effectively exploit the computer resources.

**Claims**

1. A distributed processing management apparatus adapted to be connected to a plurality of nodes so as to input a job to each of the nodes and manage the execution of the jobs, comprising:

   a first resource-related information acquiring section that acquires first resource-related information of a first node having a first job input to it;
   a second resource-related information acquiring section that acquires second resource-related information of a second node not having the first job input to it; and
   a job re-input determining section that determines if the first job input to the first node should also be input to the second node or not according to the first resource-related information acquired by the first resource-related information acquiring section and the second resource-related information acquired by the second resource-related information acquiring section.

2. The distributed processing management apparatus according to claim 1, wherein
   the job re-input determining section determines that the CPU operating ratio of the first node in executing the first job fails below a predetermined threshold value according to the first resource-related information when affirmatively determining re-input of the first job.

3. The distributed processing management apparatus according to claim 1, wherein
   the job re-input determining section determines that the progress ratio of the first node in executing the first job does not exceed a re-input limit value according to the first resource-related information when affirmatively determining re-input of the first job.

4. The distributed processing management apparatus according to claim 1, wherein
   the job re-input determining section determines availability or non-availability of a second node that is an idle node having a predetermined capability required to execute the first job and not executing a second job input to it according to the second resource-related information when determining re-input of the first job.

5. The distributed processing management apparatus according to claim 1, wherein
   the job re-input determining section determines if one or more predetermined conditions are met or not for canceling the second job being executed by the second node and re-inputting the first job according to the second resource-related information when determining re-input of the first job.

6. The distributed processing management apparatus according to claim 5, wherein
   the job re-input determining section determines if one or more predetermined conditions are met or not when it determines that there is no second node that is an idle node having a predetermined capability required to execute the first job and not executing a second job input to it according to the second resource-related information.

7. The distributed processing management apparatus according to claim 5, wherein
   the one or more predetermined conditions include at least that the priority given to the second job is lower than that of the first job, that the progress ratio of the second node in executing the second job is lower than a predetermined canceling limit value or that the second node satisfies the requirement of having a predetermined capability required to execute the first job.

8. A distributed processing management method of inputting a job to each of a plurality of nodes and managing the execution of the jobs, **characterized by** comprising:

   a first resource-related information acquiring step that acquires first resource-rotated information of a first node having a first job input to it;
   a second resource-related information acquiring step that acquires second resource-related information of a second node not having the first job input to it; and
   a job re-input determining step that determines if the first job input to the first node should also be input to the second node or not according to the first resource-related information acquired by the first resource-related information acquiring step and the second resource-related information acquired by the second resource-related information acquiring step.

9. The distributed processing management method according to claim 8, wherein

the job re-input determining step determines that the CPU operating ratio of the first node in executing the first job falls below a predetermined threshold value according to the first resource-related information when affirmatively determining re-input of the first job.

10. The distributed processing management method according to claim 8, wherein
the job re-input determining step determines that the progress ratio of the first node in executing the first job does not exceed a re-input limit value according to the first resource-related information when affirmatively determining re-input of the first job.

11. The distributed processing management method according to claim 8, wherein
the job re-input determining step determines availability or non-availability of a second node that is an idle node having a predetermined capability required to execute the first job and not executing a second job input to it according to the second resource-related information when determining re-input of the first job.

12. The distributed processing management method according to claim 8, wherein
the job re-input determining step determines if one or more predetermined conditions are met or not for canceling the second job being executed by the second node and re-inputting the first job according to the second resource-related information when determining re-input of the first job.

13. The distributed processing management method according to claim 12, wherein
the one or more predetermined conditions include at least that the priority given to the second job is lower than that of the first job, that the progress ratio of the second node in executing the second job is lower than a predetermined canceling limit value or that the second node satisfies the requirement of having a predetermined capability required to execute the first job.

14. A distributed processing management program for causing a computer to input a job to each of a plurality of nodes and manage the execution of the jobs, comprising:

   a first resource-related information acquiring step that acquires first resource-related information of a first node having a first job input to it;
   a second resource-related information acquiring step that acquires second resource-related information of a second node not having the first job input to it; and
   a job re-input determining step that determines if the first job input to the first node should also be input to the second node or not according to the first resource-related information acquired by the first resource-related information acquiring step and the second resource-related information acquired by the second resource-related information acquiring step.

15. The distributed processing management program according to claim 14, wherein
the job re-input determining step determines that the CPU operating ratio of the first node in executing the first job falls below a predetermined threshold value according to the first resource-related information when affirmatively determining re-input of the first job.

16. The distributed processing management program according to claim 14, wherein
the job re-input determining step determines that the progress ratio of the first node in executing the first job does not exceed a re-input limit value according to the first resource-related information when affirmatively determining re-input of the first job.

17. The distributed processing management program according to claim 14, wherein
the job re-input determining step determines availability or non-availability of a second node that is an idle node having a predetermined capability required to execute the first job and not executing a second job input to it according to the second resource-related information when determining re-input of the first job.

18. The distributed processing management program according to claim 14, wherein
the job re-input determining step determines if one or more predetermined conditions are met or not for canceling the second job being executed by the second node and re-inputting the first job according to the second resource-related information when determining re-input of the first job.

19. The distributed processing management program according to claim 18, wherein

the job re-input determining step determines if one or more predetermined conditions are met or not when it determines that there is no second node that is an idle node having a predetermined capability required to execute the first job and not executing a second job input to it according to the second resource-related information.

**20.** The distributed processing management program according to claim 18, wherein
the one or more predetermined conditions include at least that the priority given to the second job is lower than that of the first job, that the progress ratio of the second node in executing the second job is lower than a predetermined canceling limit value or that the second node satisfies the requirement of having a predetermined capability required to execute the first job.

# FIG.1

SERVER NODE

START    START

↓

S1

WAIT FOR
PREDEFINED TIME

↓

S2

JOB BEING
EXECUTED? —No→

S4

Yes

S5

COLLECT CPU
RESOURCE STATUS

NOTIFY CPU
AVERAGE VALUE
FOR JOB
ASSIGNMENT

S3

NOTIFY AVERAGE
VALUE OF JOB
ASSIGNABLE CPU

# FIG.2

EP 1 862 904 A1

SERVER                                                PROCESSING EXECUTING NODE

POLICY

NODE INFORMATION
· NODE NAME
· CPU IDLE AVERAGE VALUE
· PERFORMANCE
· RE-INPUT THRESHOLD VALUE

JOB CLASS INFORMATION
· CLASS NAME
· MAXIMUM MULTIPLEX VALUE
· PRIORITY

JOB MANAGEMENT INFORMATION
· JOB NAME
· INPUT COMPUTER NAME
· PROGRESS DEGREE
· JOB CLASS

START

COLLECT CPU RESOURCE STATUS — S13

READ IN POLICY — S14

JOB RE-EXECUTION POSSIBLE? — S15    No

Yes

DETERMINE MACHINE FOR INPUT — S16

RE-INPUT JOB — S17

START

WAIT FOR PREDEFINED TIME — S11

NOTIFY CPU AVERAGE VALUE FOR JOB ASSIGNMENT — S12

INPUT JOB TO SOME OTHER NODE — S18

FIG.3

```
┌──────────┐        ┌──────────┐        ┌────────────────────────┐
│  POLICY  │        │  SERVER  │        │  EXECUTING COMPUTER A  │
└──────────┘        └──────────┘        └────────────────────────┘
```

JOB EXECUTION   S21

STATUS NOTIFICATION

STATUS NOTIFICATION

S22

STATUS NOTIFICATION

POLICY COMPARISON

S23

X

THE DEGREE OF PROGRESS OF JOB CAN BE
REPORTED TO SERVER.  THE STATUS AND THE
VALUE DEFINED IN THE POLICY ARE COMPARED
AND THE SERVER DOES NOT INPUT JOB TO
SOME OTHER EXECUTING COMPUTER WHEN THE
PROGRESS EXCEEDS SPECIFIED VALUE

# FIG.4

## (A)

```
      ┌─────────────┐
      │    START    │
      └──────┬──────┘
             │
             ▼
    ┌─────────────────┐
    │ COLLECT RESULTS │──── S31
    │     OF JOB      │
    └────────┬────────┘
             │
             ▼
    ┌─────────────────┐
    │ CANCEL JOB OF   │──── S32
    │ OTHER COMPUTERS │
    └────────┬────────┘
             │
             ▼
      ┌─────────────┐
      │     END     │
      └─────────────┘
```

## (B)

| SERVER | EXECUTING COMPUTER A | EXECUTING COMPUTER B |
|---|---|---|

JOB EXECUTION    S33

STATUS NOTIFICATION

STATUS NOTIFICATION    S34

S35

JOB RE-EXECUTION

STATUS NOTIFICATION

COMPLETION NOTIFICATION

S36

CANCELLATION    S37

X

X

EP 1 862 904 A1

# FIG.5

```
        JOB INPUT TERMINAL          1a                4                          NODE              2a
     ┌──────────────────────────┐         ┌────────────────────┐        ┌────────────────────────┐
     │ JOB REQUESTING/RESULTS   │  11a    │                    │        │  JOB EXECUTING FEATURE │  12a
     │    ACQUIRING FEATURES    │         │                    │        ├────────────────────────┤
     └──────────────────────────┘         │      NETWORK       │        │  NODE INFORMATION      │  13a
                                          │                    │        │  NOTIFYING FEATURE     │
        JOB INPUT TERMINAL                │                    │        └────────────────────────┘
1b   ┌──────────────────────────┐         │                    │                    NODE              2b
     │ JOB REQUESTING/RESULTS   │  11b    └────────────────────┘        ┌────────────────────────┐
     │    ACQUIRING FEATURES    │                                       │  JOB EXECUTING FEATURE │  12b
     └──────────────────────────┘                                       ├────────────────────────┤
                                                                        │  NODE INFORMATION      │  13b
                                                  3                     │  NOTIFYING FEATURE     │
                                       ┌────────────────────┐           └────────────────────────┘
                                       │       SERVER       │
                                       ├────────────────────┤
                                       │ JOB RECEIVING FEATURE      3a
                                       ├────────────────────┤
                                       │ FIRST NODE INFORMATION     3b1
                                       │   ACQUIRING FEATURE│
                                       ├────────────────────┤
                                       │ SECOND NODE INFORMATION    3b2
                                       │   ACQUIRING FEATURE│
                                       ├────────────────────┤
                                       │ JOB ASSIGNING FEATURE      3c
                                       ├────────────────────┤
                                       │ JOB EXECUTION      │       3d
                                       │ MANAGING FEATURE   │
                                       ├────────────────────┤
                                       │ MULTIPLEXED JOB    │       3e
                                       │ EXECUTION/MANAGEMENT
                                       │ FEATURE            │
                                       ├────────────────────┤
                                       │ JOB RE-INPUT       │       3f
                                       │ DETERMINING FEATURE│
                                       └────────────────────┘
```

NODE TABLE  5    JOB MANAGEMENT TABLE  6    JOB CLASS TABLE  7

20

## FIG.6

| NODE NAME | CPU AVERAGE OPERATING RATIO | LOCAL CPU OPERATING RATIO | CAPABILITY VALUE | THRESHOLD VALUE | STATUS |
|---|---|---|---|---|---|
| | | | | | |

## FIG.7

| CPU TYPE | OPERATING FREQUENCY | PERFORMANCE VALUE | THRESHOLD VALUE |
|---|---|---|---|
| Pentium 4 | 3.6GHz | 1 | 60% |
| | 3.6GHz | 0.9 | 70% |
| | 2.8GHz | 0.8 | 80% |
| Celeron D | 2.8GHz | 0.7 | 90% |
| | | | |
| | | | |

## FIG.8

| NODE NAME | CPU OPERATING RATIO | LOCAL CPU OPERATING RATIO | CAPABILITY VALUE | THRESHOLD VALUE | STATUS |
|---|---|---|---|---|---|
| N1 | 80 | 20 | 1 | 60% | IN EXECUTION |
| N2 | 0 | 30 | 0.9 | 70% | STANDBY FOR EXECUTION |
| N3 | 50 | 50 | 0.8 | 80% | IN EXECUTION |

# FIG.9

| JOB NAME | EXECUTING NODE NAME | CLASS NAME | EXECUTION TIME | PROGRESS RATIO |
|---|---|---|---|---|
| JOB NAME | EXECUTING NODE NAME | CLASS NAME | EXECUTION TIME | PROGRESS RATIO |
| JOB NAME | EXECUTING NODE NAME | CLASS NAME | EXECUTION TIME | PROGRESS RATIO |

SECURE JOB MANAGEMENT TABLES FOR THE DEGREE OF MULTIPLEXING

# FIG.10

| JOB NAME | EXECUTING NODE NAME | CLASS NAME | EXECUTION TIME | PROGRESS RATIO |
|---|---|---|---|---|
| J1 | N1 | A | 5 | 75% |
| J2 | N3 | B | 3 | 80% |
| J1 | | A | 0 | 0% |
| J1 | | A | 0 | 0% |

# FIG.11

| CLASS NAME | PRIORITY | DEGREE OF MULTIPLEXING | RE-INPUT LIMIT VALUE | CANCELLATION LIMIT VALUE |
|---|---|---|---|---|

# FIG.12

| CLASS NAME | PRIORITY | DEGREE OF MULTIPLEXING | RE-INPUT LIMIT VALUE | CANCELLATION LIMIT VALUE |
|---|---|---|---|---|
| A | 1 | 3 | 90% | |
| B | 2 | 1 | 70% | 70% |

## FIG.13

```
        ┌─────────────────────┐
        │      JOB INPUT      │
        └─────────────────────┘
                   │
                   ▼         S41
                  ╱╲
                 ╱  ╲
                ╱    ╲
       ┌───────       ───────┐ ────────── Yes
        ╲  RE-INPUT JOB?   ╱
         ╲              ╱
          ╲          ╱
            ╲      ╱
             No

    ┌──────────────────────┐ S42   ┌──────────────────────┐ S45
    │  PREPARE DATA ON JOB │       │ UPDATE RELATED DATA ON JOB │
    │   MANAGEMENT TABLE   │       │     MANAGEMENT TABLE    │
    └──────────────────────┘       └──────────────────────┘
                │
                ▼         S43
    ┌──────────────────────┐
    │      INITIALIZE      │
    └──────────────────────┘
                │
                ▼         S44
    ┌──────────────────────┐
    │     EXECUTE JOB      │◄──────────────
    └──────────────────────┘
                │
                ▼
      ┌──────────────────────┐
      │  COMPLETION OF JOB   │
      │        INPUT         │
      └──────────────────────┘
```

# FIG.14

**SERVER SIDE PROCESS**

**NODE SIDE PROCESS**

```
      ( ACQUISITION OF NODE )              ( NOTIFICATION OF NODE )
        INFORMATION 1                        INFORMATION 1
                                                    │
                   ┌──S52          NODE OPEN        ▼         ┌──S51
                   ▼          NOTIFICATION     ┌──────────────┐
         ┌──────────────┐  ◄ ─ ─ ─ ─ ─ ─      │ TRANSMITS NODE NAME │
         │ ACQUIRE NODE NAME │                 │   AND MACHINE │
         │   AND MACHINE │                     │ SPECIFICATIONS │
         │ SPECIFICATIONS │                    └──────────────┘
         └──────────────┘                             │
                   │                                  ▼
                   ▼          ┌──S53                ( END )
                  NAME
         No   ALREADY REGISTERED IN
         ◄── NODE TABLE?
                   │
                  Yes    ┌──S54
                   ▼
         ┌──────────────┐
         │ COMPUTE CAPABILITY │
         │   VALUE FROM │
         │ SPECIFICATIONS │
         └──────────────┘
                   │      ┌──S55
                   ▼
    ┌─────────────────────────────┐
    │ REGISTER NODE NAME AND CAPABILITY │
    │      VALUE TO NODE TABLE │
    └─────────────────────────────┘
                   │      ┌──S56
                   ▼
    ┌─────────────────────────────────────┐
    │ INITIALIZE AVERAGE CPU OPERATING RATIO, │
    │ LOCAL CPU OPERATING RATIO AND "STATUS" │
    │ ON NODE TABLE AND CLEAR THRESHOLD VALUES │
    └─────────────────────────────────────┘
                   │
                   ▼
                ( END )
```

# FIG.15

SERVER SIDE                                                    NODE SIDE

ACQUISITION OF NODE
INFORMATION 2

NOTIFICATION OF NODE
INFORMATION 2

S63

ACQUIRE INFORMATION
FROM NODE (LOCAL CPU
TIME, AVERAGE CPU
TIME AND CURRENT
PROGRESS RATIO)

NOTIFICATION OF
NODE STATUS

NOTIFY NODE NAME, LOCAL
CPU TIME, AVERAGE CPU
TIME AND CURRENT
PROGRESS RATIO

S61

COMPUTATIONALLY DETERMINE THE AVERAGE
OPERATING RATIO OF THE CPUS AND THE
OPERATING RATIOS OF THE LOCAL CPUS AND
UPDATE THE NODE TABLE

S64

WAIT FOR
PREDETERMINED TIME

S62

COMPUTE PROGRESS RATIO FROM
JOB ACCUMULATED VALUE OF JOB
EXECUTION HOURS AND
EXPECTED ENDING TIME

S65

UPDATE PROGRESS RATIO ON NODE TABLE

S66

# FIG.16

DETERMINATION ON
JOB RE-INPUT
(SERVER SIDE)

READ IN NEXT
RECORD FROM
NODE TABLE —S71

FINAL RECORD? —S72

No

Yes

SUSPEND
PROCESS FOR
PREDEFINED TIME —S73

JOB STATUS =
IN EXECUTION? —S74

No

Yes

CPU OPERATING RATIO
< THRESHOLD VALUE? —S75

No

Yes

START
MULTIPLEXED JOB
INPUT PROCESS —S76

## FIG.17

START ──────── OBJECT NODE TABLE IS KNOWN

S81 — LOOK INTO JOB MANAGEMENT TABLE, USING NODE NAME AS RETRIEVAL KEY

S82 — LOOK INTO CLASS TABLE, USING CLASS NAME AS RETRIEVAL KEY

S83 — COMPUTE FOLLOWING FOR JOB MANAGEMENT TABLE
1) PREDICTED SHORTEST PROCESSING TIME
2) AVERAGE OVERALL PROCESSING QUANTITY
3) MAXIMUM PROGRESS RATIO
4) MINIMUM REQUIRED PERFORMANCE

1) Min (EXECUTION TIME × (100 - DEGREE OF PROGRESS) / DEGREE OF PROGRESS)
2) Ave (NODE PROCESSING CAPABILITY × CPU AVERAGE OPERATING RATIO × (PREDICTED SHORTEST PROCESSING TIME + EXECUTION TIME))
3) Max (PROGRESS RATIO)
4) Min (2 ABOVE / 1 ABOVE)

S84 — IS MAXIMUM PROGRESS RATIO < RE-INPUT LIMIT VALUE?   No / Yes

S85 — ROOM FOR DEGREE OF MULTIPLEXING? (JOB MANAGEMENT TABLE)   No / Yes

S86 — RETRIEVE IDLE EXECUTING NODE (REQUEST) REQUIREMENT: MINIMUM REQUIRED PERFORMANCE < CAPABILITY VALUE × (100 - LOCAL CPU OPERATING RATIO)

S87 — ANY IDLE NODE MEETING REQUIREMENT?   No / Yes

S88 — LOOK INTO JOB MANAGEMENT TABLES OTHER THAN ITS OWN (ALSO JOB CLASS TABLE AND NODE TABLE IF NECESSARY) A JOB SATISFYING ALL THREE REQUIREMENTS INCLUDING:
1) JOB HAVING PRIORITY LOWER THAN JOB BEING CURRENTLY EXECUTED
2) JOB WHOSE JOB PROGRESS RATIO IS LOWER THAN THE CANCELLATION LIMIT VALUE AND
3) JOB WITH EXECUTING NODE WHOSE CAPABILITY VALUE × CPU AVERAGE OPERATING RATIO GREATER THAN MINIMUM REQUIRED PERFORMANCE

S89 — ANY JOB SATISFYING REQUIREMENTS?   No / Yes

S90 — CANCEL JOB

S91 — INPUT JOB

NOTIFICATION OF ROOM ON JOB MANAGEMENT TABLE, NODE TABLE AND CLASS TABLE

END

# FIG.18

SERVER SIDE

NODE SIDE

( RECEPTION OF CANCELLATION )

( CANCELLATION REQUEST )

S103

| ACQUIRE CANCELLATION INFORMATION |

CANCELLATION
REQUEST

| NOTIFY CANCELLATION, ANNEXING NODE NAME AND JOB NAME | S101

S104

| CLEAR CPU TIME, JOB EXECUTION TIME AND STATUS FROM NODE TABLE |

S102

| WAIT FOR PREDETERMINED TIME |

S105

| DELETE DATA CORRESPONDING TO NODE NAME AND JOB NAME FROM JOB TABLE |

( END )

## FIG.19

SERVER SIDE

END AND JOB CANCELLATION
PROCESS

S112
ACQUIRE NODE NAME,
JOB NAME AND STATUS

ENDING MESSAGE

S113
NORMAL ENDING?

N O : CANCEL
YES : RANSFER REQUEST

S114
JOB WITH
MULTIPLEXED PROCESS?

YES

NO

S116
REQUEST CANCELLATION TO OTHER
NODES HAVING SAME JOB NAME

S115
ACQUIRE RESULTS INFORMATION

RESULTS TRANSFER

S117
CLEAR CPU TIMES, JOB TIME AND STATUS
OF NODE CORRESPONDING TO NODE TABLE

S118
DELETE NODE INFORMATION
FROM JOB TABLE

CANCELLATION
REQUEST

END

NODE SIDE (ENDING NODE)

END OF JOB NOTIFICATION AND
RESULTS TRANSFER

S111
TRANSMIT NODE NAME,
EXECUTION ENDING JOB NAME AND
ENDING STATUS AFTER END OF JOB

S119
ACQUIRE ACKNOWLEDGEMENT
FROM SERVER

S120
CANCELLATION REQUEST?

YES

NO

S121
TRANSFER RESULTS
INFORMATION

END JOB — S122

END

NODE SIDE (JOB-NOT-ENDING NODE)

RECEPTION OF CANCELLATION
FROM SERVER

S123
ACQUIRE ACKNOWLEDGEMENT
FROM SERVER

S124
CANCELLATION REQUEST?

YES

NO

S125
TRANSFER RESULTS
INFORMATION

END JOB — S126

END

# FIG.20

COLLECT CPU RESISTOR STATUS — S211

EVERY PREDETERMINED TIME PERIOD

MANAGE RESOURCE STATUS OF EACH NODE — S212

INVESTIGATION OF RESOURCE STATUS (SERVER SIDE)

REQUEST JOB EXECUTION / RE-INPUT — S221

CHECK RESOURCES OF NODE — S222

SELECT NODE SHOWING LOW OPERATING RATIO — S223

INPUT JOB — S224

JOB MANAGEMENT (SERVER SIDE)

EXECUTE JOB — S225

CPU RESOURCE THRESHOLD VALUE EXCEEDED? — S226

No

Yes

REQUEST SERVER TO SWITCH TO SOME OTHER NODE — S227

CANCEL JOB — S228

JOB EXECUTION (NODE SIDE)

EP 1 862 904 A1

# FIG.21

NODE A
NODE B

t0

—RISE OF LOAD AT THIS POINT OF TIME → ▼ t1 ——RE-INPUT——→

EXPECTED TO END HERE S231
(WITHOUT RISE OF LOAD) ——→ t2

RISE OF LOAD BEING INSTANTANEOUS S232
END OF JOB HERE IF NO RE-INPUT ——→ t3

t4

END OF RE-INPUT JOB

RISE OF LOAD BEING LONG TERM S233
END OF JOB HERE IF NO RE-INPUT ——→ ▼ t5

TIME (t)

<div align="center">

**INTERNATIONAL SEARCH REPORT**

</div>

| | International application No. |
|---|---|
| | PCT/JP2005/005129 |

| A. CLASSIFICATION OF SUBJECT MATTER |
|---|
| Int.Cl⁷ G06F9/50 |
| |
| According to International Patent Classification (IPC) or to both national classification and IPC |

| B. FIELDS SEARCHED |
|---|
| Minimum documentation searched (classification system followed by classification symbols) |
| Int.Cl⁷ G06F9/50, 15/00, 15/16-15/177, 17/60 |
| |

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)
JSTPlus(JOIS)

| C. DOCUMENTS CONSIDERED TO BE RELEVANT |
|---|

| Category* | Citation of document, with indication, where appropriate, of the relevant passages | Relevant to claim No. |
|---|---|---|
| X | Davis Abramson et al., "High Performance Parametric Modeling with Nimrod/G: Killer | 1-4,8-11, 14-17 |
| A | Application for the Global Grid?", Proceedings of the International Parallel and Distributed Processing Symposium (IPDPS' 2000), 2000, pages 520 to 528 (especially page 524, left col. 1.21 to right col. 1.29) | 5-7,12,13, 18-20 |
| X | JP 2002-269394 A (Sony Corp.), 20 September, 2002 (20.09.02), | 1,4,8,11, 14,17 |
| A | Par. No. [0024]; Figs. 1, 4 (Family: none) | 2,3,5-7,9, 10,12,13,15, 16,18-20 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 June, 2005 (21.06.05) | 12 July, 2005 (12.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2005/005129 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2004-62603 A (Dainippon Printing Co., Ltd.), 26 February, 2004 (26.02.04), Full text; all drawings (Family: none) | 1-20 |
| A | JP 2002-269060 A (Hitachi, Ltd.), 20 September, 2002 (20.09.02), Full text; all drawings (Family: none) | 1-20 |
| A | JP 2001-344199 A (NEC Corp.), 14 December, 2001 (14.12.01), Par. No. [0057]; Fig. 1 & US 2001-49663 A | 1-20 |
| A | JP 11-175485 A (Toshiba Corp.), 02 July, 1999 (02.07.99), Full text; all drawings (Family: none) | 1-20 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004287889 A